# EUROPEAN PATENT APPLICATION

(11) **EP 4 560 668 A1**
(43) Date of publication of application: **28.05.2025**
(21) Application number: 24209489.4
(22) Date of filing: 29.10.2024
(51) Int. Cl.: H01G 4/232, H01G 4/30, H01G 4/12

(54) **MULTILAYER ELECTRONIC COMPONENT**

(30) Priority: 22.11.2023 KR 20230163747
(71) Applicant: Samsung Electro-Mechanics Co., Ltd., Suwon-si, Gyeonggi-do (KR)
(72) Inventor: Kim, Seon Ho, Suwon-si, Gyeonggi-do (KR)
(74) Representative: Grünecker Patent- und Rechtsanwälte PartG mbB

(57) **Abstract**

A multilayer electronic component includes a body including a dielectric layer and internal electrodes alternately disposed with the dielectric layer in a first direction, and including first and second surfaces opposing each other in the first direction, third and fourth surfaces opposing each other in a second direction, and fifth and sixth surfaces opposing each other in a third direction; and external electrodes including connection portions disposed on the third and fourth surfaces, respectively, and band portions extending from the respective connection portions onto a portion of the first surface and a portion of the second surface. The external electrodes each include an electrode layer connected to one of the internal electrodes, and a first plating layer disposed on the electrode layer, and a metal layer including a conductive metal and glass is interposed between the electrode layer and the body in the band portions.

## Description

### CROSS-REFERENCE TO RELATED APPLICATION(S)

This application claims benefit of priority to Korean Patent Application No. 10-2023-0163747 filed on November 22, 2023 in the Korean Intellectual Property Office, the disclosure of which is incorporated herein by reference in its entirety.

### TECHNICAL FIELD

The present disclosure relates to a multilayer electronic component.

### BACKGROUND

A multilayer ceramic capacitor (MLCC), a multilayer electronic component, may be a chip condenser mounted on the printed circuit boards of various types of electronic products, such as image display devices including a liquid crystal display (LCD), a plasma display panel (PDP), or the like, a computer, a smartphone, a mobile phone, an infotainment system, or the like, and serving to charge or discharge electricity therein or therefrom.

In order to prevent moisture from penetrating into an external electrode, an attempt was made to form a separate plating layer disposed in contact with a body on a basic electrode layer. However, there may be a risk that an end portion of the plating layer and a surface of the body may be separated due to a difference in compositions, and as a result, damage to the basic electrode layer and penetration of moisture into the body may not be prevented, a problem of reducing moisture resistance reliability of a multilayer electronic component may occur.

Therefore, there is a need for structural improvement that may simultaneously prevent moisture from penetrating into the external electrode and from penetrating into the body.

### SUMMARY

An aspect of the present disclosure is to prevent a phenomenon in which an end portion of a plating layer and a surface of a body are separated from each other to deteriorate moisture resistance reliability of a multilayer electronic component.

The purposes of the present disclosure are not limited to the above-described contents, and can be more easily understood in a process of explaining specific embodiments of the present disclosure.

According to an aspect of the present disclosure, a multilayer electronic component includes a body including a dielectric layer and an internal electrode alternately disposed with the dielectric layer in a first direction, and including a first surface and a second surface opposing each other in the first direction, a third surface and a fourth surface, connected to the first and second surfaces and opposing each other in a second direction, and a fifth surface and a sixth surface, connected to the first to fourth surfaces and opposing each other in a third direction; and external electrodes including connection portions disposed on the third and fourth surfaces, and band portions extending from the connection portions onto a portion of the first surface and a portion of the second surface, wherein the external electrodes include an electrode layer connected to the internal electrode, and a first plating layer disposed on the electrode layer, and a metal layer including a conductive metal and glass is interposed between the electrode layer and the body in the band portions.

### BRIEF DESCRIPTION OF DRAWINGS

The above and other aspects, features, and advantages of the present disclosure will be more clearly understood from the following detailed description, taken in conjunction with the accompanying drawings, in which:
FIG. 1 is a perspective view schematically illustrating a multilayer electronic component according to an embodiment of the present disclosure.
FIG. 2 is a cross-sectional view of FIG. 1, taken along line I-I'.
FIG. 3 is a cross-sectional view corresponding to FIG. 2 of a multilayer electronic component according to an embodiment.
FIG. 4 is an enlarged view of portion A of FIG. 2.
FIG. 5 is a cross-sectional view of FIG. 1, taken along line II-II'.
FIGS. 6 and 7 are cross-sectional views of first and second modified examples of FIG. 1, taken alone line III-III'.
FIG. 8 is an exploded perspective view of a body according to an embodiment.

### DETAILED DESCRIPTION

Hereinafter, embodiments of the present disclosure will be described with reference to specific embodiments and the accompanying drawings. However, embodiments of the present disclosure may be modified into various other forms, and the scope of the present disclosure is not limited to the embodiments described below. Further, embodiments of the present disclosure may be provided for a more complete description of the present disclosure to the ordinarily skilled artisan. Therefore, shapes, sizes, and the like, of the elements in the drawings may be exaggerated for clarity of description, and the elements denoted by the same reference numerals in the drawings may be the same elements.

In addition, in order to clearly explain the present disclosure in the drawings, portions not related to the description will be omitted for clarification of the present disclosure, and a thickness may be enlarged to clearly illustrate layers and regions. The same reference numerals will be used to designate the same components in the same reference numerals. Further, throughout the specification, when an element is referred to as "comprising" or "including" an element, it means that the element may further include other elements as well, without departing from the other elements, unless specifically stated otherwise.

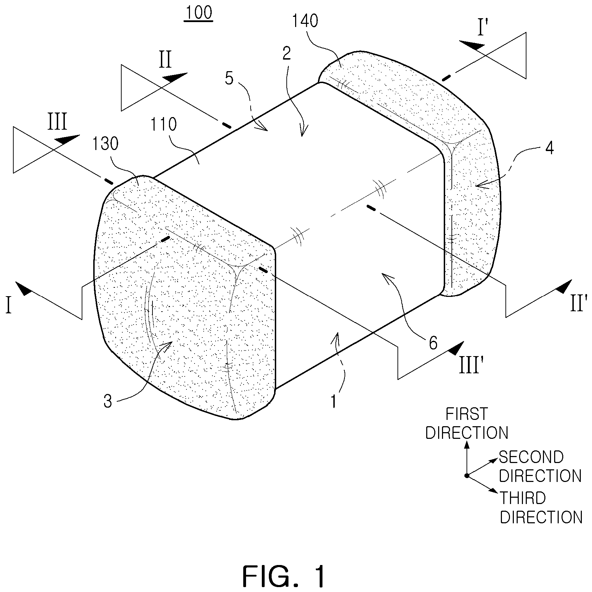

FIG. 1 is a perspective view schematically illustrating a multilayer electronic component according to an embodiment of the present disclosure.

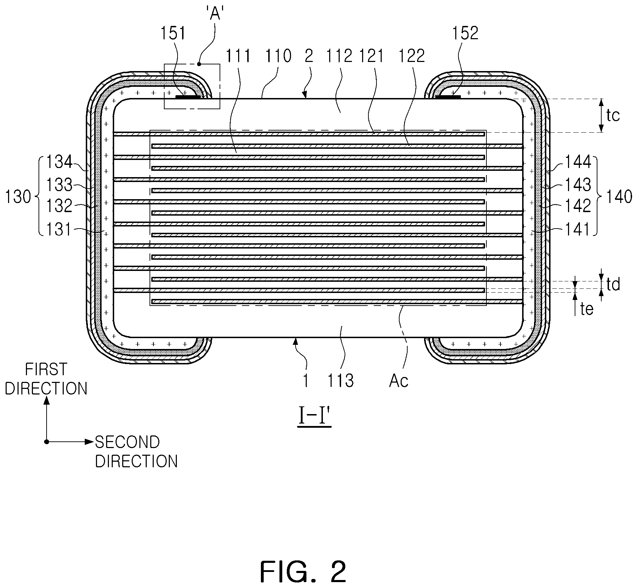

FIG. 2 is a cross-sectional view of FIG. 1, taken along line I-I'.

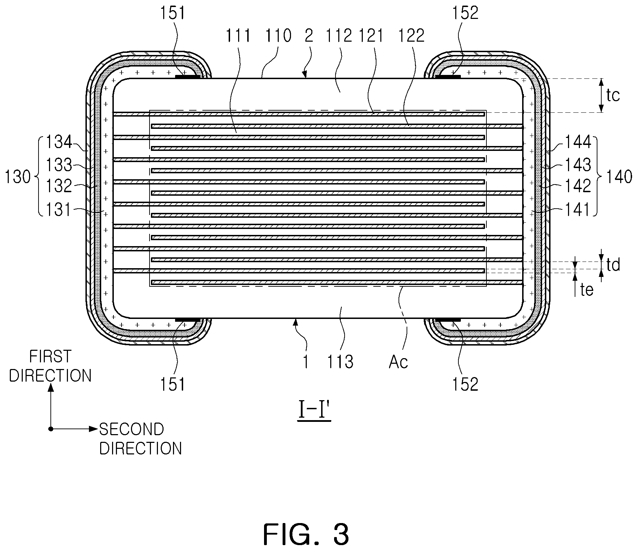

FIG. 3 is a cross-sectional view corresponding to FIG. 2 of a multilayer electronic component according to an embodiment.

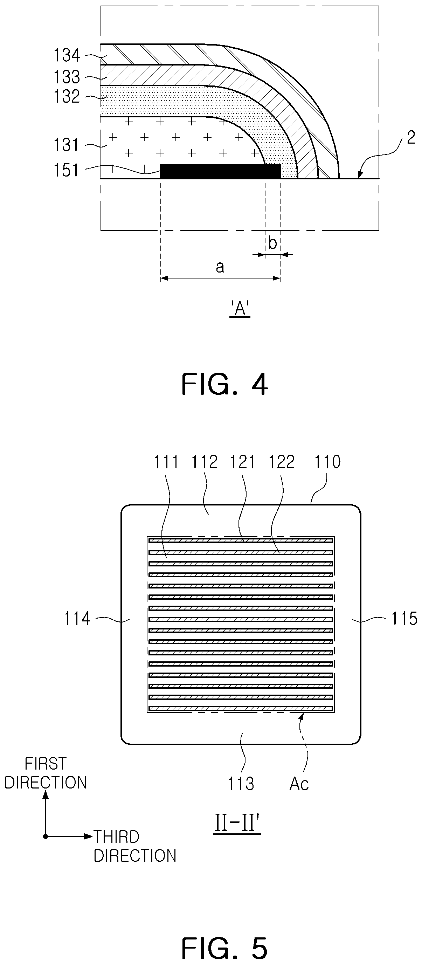

FIG. 4 is an enlarged view of portion A of FIG. 2.

FIG. 5 is a cross-sectional view of FIG. 1, taken along line II-II'.

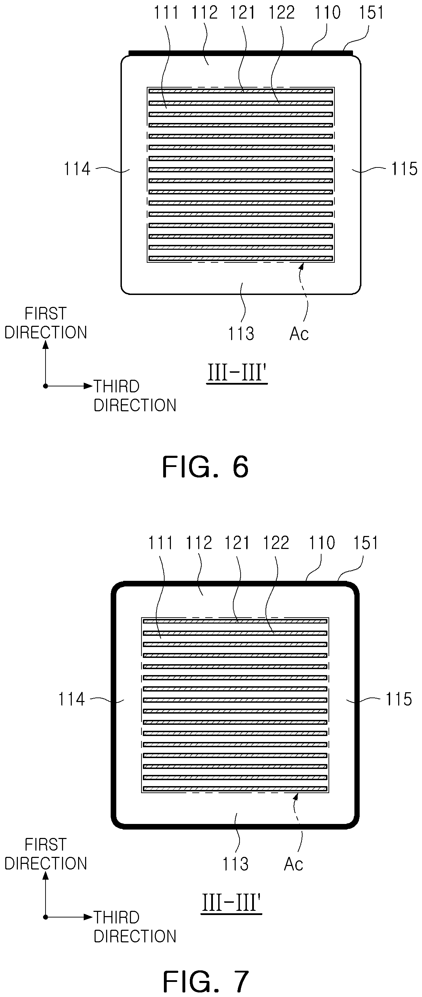

FIGS. 6 and 7 are cross-sectional views of first and second modified examples of FIG. 1, taken alone line III-III'.

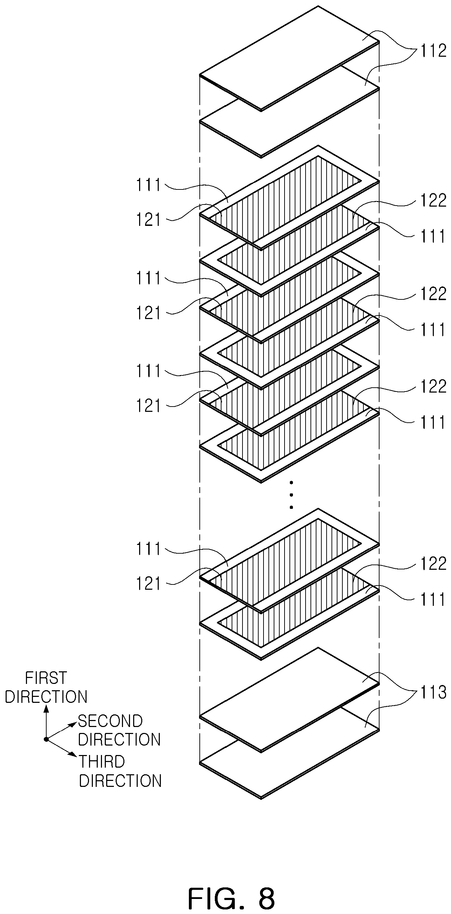

FIG. 8 is an exploded perspective view of a body according to an embodiment.

In the drawings, a first direction may be defined as a direction in which first and second internal electrodes are alternately arranged with a dielectric layer interposed therebetween, or a thickness T direction, and, among second and third directions, perpendicular to the first direction, the second direction may be defined as a length L direction, and the third direction may be defined as a width W direction.

Hereinafter, a multilayer electronic component according to an embodiment of the present disclosure and various examples thereof will be described in detail with reference to FIGS. 1 to 8.

A multilayer electronic component according to an embodiment of the present disclosure may include a body 110 including a dielectric layer 111 and an internal electrode (121 and 122) alternately disposed with the dielectric layer in a first direction, and including a first surface 1 and a second surface 2 opposing each other in the first direction, a third surface 3 and a fourth surface 4, connected to the first and second surfaces and opposing each other in a second direction, and a fifth surface 5 and a sixth surface 6, connected to the first to fourth surfaces and opposing each other in a third direction; and external electrodes 130 and 140 including connection portions disposed on the third and fourth surfaces, and band portions extending from the connection portions onto a portion of the first surface and a portion of the second surface. Each of the external electrodes may include an electrode layer (131 and 141) connected to the internal electrode, and a first plating layer (132 and 142) disposed on the electrode layer, and a metal layer (151 and 152) including a conductive metal and glass is interposed between the electrode layer (131 and 141) and the body 110 in the band portions.

Referring to FIG. 2, the body 110 may include the dielectric layer 111, and the internal electrode (121 and 122) alternately disposed with the dielectric layer 111 in the first direction.

Although the specific shape of the body 110 is not particularly limited, the body 110 may have a hexahedral shape or the like, as illustrated. Due to shrinkage of ceramic powder particles included in the body 110 during a sintering process, the body 110 may not have an entirely straight hexahedral shape, but may have a substantially hexahedral shape.

The body 110 may include first and second surfaces 1 and 2 opposing each other in the first direction, third and fourth surfaces 3 and 4 connected to the first and second surfaces 1 and 2 and opposing each other in the second direction, and fifth and sixth surfaces 5 and 6 connected to the first and second surfaces 1 and 2, connected to the third and fourth surfaces 3 and 4, and opposing each other in the third direction.

A plurality of dielectric layers 111 forming the body 110 may be in a sintered state, and boundaries between adjacent dielectric layers 111 may be integrated to such an extent that it may be difficult to identify the same without using a scanning electron microscope (SEM).

A raw material for forming the dielectric layer 111 is not particularly limited, as long as sufficient capacitance may be obtained therewith. For example, a barium titanate-based material, a lead composite perovskite-based material, a strontium titanate-based material, or the like, may be used. The barium titanate-based material may include a BaTiO₃-based ceramic powder, and examples of the ceramic powder may include BaTiO₃, or (Ba₁₋ₓCaₓ)TiO₃(0<x<1), Ba(Ti_{1-y}Ca_{y})O₃(0<y<1), (Ba₁₋ₓCaₓ)(Ti_{1-y}Zr_{y})O₃(0<x<1, 0<y<1), Ba(Ti_{1-y}Zr_{y})O₃(0<y<1), or the like, in which calcium (Ca), zirconium (Zr), or the like is partially dissolved in BaTiO₃, or the like.

In addition, various ceramic additives, organic solvents, binders, dispersants, or the like may be added to the powder of barium titanate (BaTiO₃), and the like, as the raw material for forming the dielectric layer 111.

An average thickness td of the dielectric layer 111 is not particularly limited.

For the purpose of miniaturization and high capacitance of the multilayer electronic component 100, the average thickness td of the dielectric layer 111 may be 0.35 µm or less, and to improve reliability of the multilayer electronic component 100 under high temperature and high pressure, the average thickness td of the dielectric layer 111 may be 3 µm or more.

The average thickness td of the dielectric layer 111 may be measured by scanning images of cross-sections (L-T plane) in third and first directions of the body 110 using a scanning electron microscope (SEM).

For example, the average thickness td of the dielectric layer 111 may be determined by defining five points, one reference point, two points to the left thereto, and two points to the right thereto, at equal intervals around the one reference point, measuring thicknesses of the points, and calculating an average value therefrom, based on a point at which a length direction center line of the body and a thickness direction center line of the body meet, for a total of five dielectric layers, including one dielectric layer, two dielectric layers thereon, and two dielectric layers therebelow, based on the one dielectric layer provided at the point at which the length direction center line of the body and the thickness direction center line of the body meet, among dielectric layers extracted from an image acquired by scanning a cross-section in length and thickness directions (L-T) cut from a central portion in a width direction of the body 110 using a scanning electron microscope (SEM). Other measurement methods and/or tools appreciated by one of ordinary skill in the art, even if not described in the present disclosure, may also be used.

The internal electrode (121 and 122) may be alternately disposed with the dielectric layer 111 interposed therebetween, to form capacitance together with the dielectric layer 111.

The internal electrode (121 and 122) may include the first and second internal electrodes 121 and 122. The first and second internal electrodes 121 and 122 may be alternately disposed to oppose each other with the dielectric layers 111, constituting the body 110, interposed therebetween, and may be exposed from the third and fourth surfaces 3 and 4 of the body 110, respectively. Specifically, one end of the first internal electrode 121 may be connected to the third surface 3, and one end of the second internal electrode 122 may be connected to the fourth surface 4.

As illustrated in FIG. 2, the first internal electrode 121 may be spaced apart from the fourth surface 4, and may be exposed through the third surface 3, and the second internal electrode 122 may be spaced apart from the third surface 3, and may be exposed through the fourth surface 4. The first external electrode 130 may be disposed on the third surface 3 of the body 110 and connected to the first internal electrode 121, and the second external electrode 140 may be disposed on the fourth surface 4 of the body 110 and connected to the second internal electrode 122.

For example, the first internal electrode 121 may not be connected to the second external electrode 140, but may be connected to the first external electrode 130, and the second internal electrode 122 may not be connected to the first external electrode 130, but may be connected to the second external electrode 140. Therefore, the first internal electrode 121 may be formed at a certain distance apart from the fourth surface 4, and the second internal electrode 122 may be formed at a certain distance apart from the third surface 3. In this case, the first and second internal electrodes 121 and 122 may be electrically separated from each other by the dielectric layer 111 interposed therebetween.

A material for forming the internal electrode (121 and 122) is not particularly limited, and a material having excellent electrical conductivity may be used. For example, the internal electrode (121 and 122) may include one or more of nickel (Ni), copper (Cu), palladium (Pd), silver (Ag), gold (Au), platinum (Pt), tin (Sn), tungsten (W), titanium (Ti), or alloys thereof.

In addition, the internal electrode (121 and 122) may be formed by printing a conductive paste for the internal electrodes containing one or more of nickel (Ni), copper (Cu), palladium (Pd), silver (Ag), gold (Au), platinum (Pt), tin (Sn), tungsten (W), titanium (Ti), or alloys thereof, on a ceramic green sheet. As a printing method of the conductive paste for the internal electrodes, a screen-printing method, a gravure printing method, or the like may be used, but the present disclosure is not limited thereto.

An average thickness te of the internal electrode (121 and 122) is not particularly limited, and may vary depending on the purpose. To miniaturize the multilayer electronic component 100, the average thickness te of the internal electrode (121 and 122) may be 0.35 µm or less, and to improve reliability of the multilayer electronic component 100 under high temperature and high pressure, the average thickness te of the internal electrode (121 and 122) may be 3 µm or more.

The average thickness te of the internal electrode (121 and 122) may be determined by defining five points, one reference point, two points to the left thereof, and two points to the right thereof, at equal intervals around the one reference point, measuring thicknesses of the points, and calculating an average value therefrom, based on a point at which a length direction center line of the body and a thickness direction center line of the body meet, for a total of five dielectric layers, including one internal electrode layer, two internal electrode layers thereon, and two internal electrode layers therebelow, based on the one internal electrode layer provided at the point at which the length direction center line of the body and the thickness direction center line of the body meet, among internal electrode layers extracted from an image acquired by scanning a cross-section in length and thickness directions (L-T) cut from a central portion in a width direction of the body 110 using a scanning electron microscope (SEM). Other measurement methods and/or tools appreciated by one of ordinary skill in the art, even if not described in the present disclosure, may also be used.

Referring to FIGS. 2 and 5, the body 110 may include a capacitance formation portion Ac disposed in the body 110 and which may be a region in which the first and second internal electrodes 121 and 122 overlap in the first direction.

The capacitance forming portion Ac may be a portion that contributes to forming the capacitance of the capacitor, and may be formed by repeatedly stacking a plurality of first and second internal electrodes 121 and 122 with the dielectric layer 111 interposed, as illustrated in FIG. 8.

An upper cover portion 112 may be disposed on one surface of the capacitance forming portion Ac in the first direction, and a lower cover portion 113 may be disposed on the other surface of the capacitance forming portion Ac in the first direction.

The upper cover portion 112 and the lower cover portion 113 may be formed by stacking a single dielectric layer 111 or two or more dielectric layers 111 on upper and lower surfaces of the capacitance forming portion Ac in the first direction, respectively, and may basically play a role in preventing damage to the internal electrodes due to physical or chemical stress.

The upper cover portion 112 and the lower cover portion 113 may not include the internal electrodes, and may include the same material as the dielectric layer 111.

For example, the upper cover portion 112 and the lower cover portion 113 may include a ceramic material, and may include, for example, a barium titanate (BaTiO₃)-based ceramic material.

A thickness tc of each of the cover portions 112 and 113 is not limited. To more easily achieve miniaturization and high capacitance of the multilayer electronic component, the thickness tc of each of the cover portions 112 and 113 may be 15 µm or less. In this case, an average thickness of the cover portions 112 and 113 may mean an average thickness of each of the first cover portion 112 and the second cover portion 113.

The average thickness tc of the cover portions 112 and 113 may mean a size in the first direction, and may be an average value of sizes of the cover portions 112 and 113 measured at five points at equal intervals above or below the capacitance forming portion Ac in the first direction.

Referring to FIG. 5, margin portions 114 and 115 may be disposed on one surface and the other surface of the capacitance forming portion Ac in the third direction.

The margin portions 114 and 115 may include a margin portion 114 disposed on the fifth surface 5 of the body 110, and a margin portion 115 disposed on the sixth surface 6. For example, the margin portions 114 and 115 may be disposed on both side surfaces of the body 110 in the width direction.

As illustrated in FIG. 4, the margin portions 114 and 115 may refer to regions between both ends of the first and second internal electrodes 121 and 122 and boundaries surface of the body 110, in a cross-section of the body 110 in width-thickness (W-T) directions.

The margin portions 114 and 115 may basically serve to prevent damage to the internal electrodes due to physical or chemical stress.

The margin portions 114 and 115 may be prepared by applying a conductive paste to a ceramic green sheet to form the internal electrodes, except for regions in which the margin portions are formed.

Additionally, to suppress occurrence of a step difference caused by the internal electrodes (121 and 122), after stacking, the internal electrodes may be cut to expose the fifth and sixth surfaces 5 and 6 of the body, and then a single dielectric layer or two or more dielectric layers may be stacked on both side surfaces of the capacitance forming portion Ac in the width direction, to form the margin portions 114 and 115.

Widths of the margin portions 114 and 115 is not limited. For example, to more easily achieve miniaturization and high capacitance of the multilayer electronic component, average widths of the margin portions 114 and 115 may be 15 µm or less, respectively.

Meanwhile, the width of the margin portions 114 and 115 is not limited. However, in order to more easily achieve miniaturization and high capacity of stacked electronic components, the average width of the margin portions 114 and 115 may be 15 µm or less.

The average widths of the margin portions 114 and 115 may mean an average size of the margin portions 114 and 115 in the third direction, and may be an average value of sizes of the margin portions 114 and 115, in the third direction, measured at five points at equal intervals on the side surface of the capacitance forming portion Ac.

The external electrodes 130 and 140 may be disposed on the body 110.

The external electrodes 130 and 140 may be disposed on the third surface 3 and the fourth surface 4, which may be surfaces facing in the second direction, perpendicular to the first direction of the body 110, to be connected to the internal electrode (121 and 122). Specifically, the first external electrode 130 may be disposed on the third surface 3, which may be one surface facing the second direction, perpendicular to the first direction of the body 110, to be connected to the first internal electrode 121, and the second external electrode 140 may be disposed on the fourth surface 4, which may be the other surface facing the second direction, perpendicular to the first direction of the body 110, to be connected to the second internal electrode 122.

In this embodiment, a structure in which the multilayer electronic component 100 may have two external electrodes 130 and 140 may be described, but the number, shapes, or the like, of the external electrodes 130 and 140 may be changed, depending on shapes of the internal electrodes (121 and 122), or other purposes.

The external electrodes 130 and 140 may include the connection portions disposed on the third surface 3 and the fourth surface 4, and the band portions extending from the connection portions onto a portion of the first surface 1 and a portion of the second surface 2.

Referring to FIGS. 2 and 3, it is illustrated that the band portions extend from the connection portions onto a portion of the first surface 1 and a portion of the second surface 2, but the present disclosure is not limited thereto. In an embodiment, the band portions may have a structure extending from the connection portions onto a portion of the first surface 1, a portion of the second surface 2, a portion of the fifth surface 5, and a portion of the sixth surface 6.

The external electrodes 130 and 140 may include the electrode layer (131 and 141) connected to the internal electrode. The electrode layer (131 and 141) may be disposed on the third and fourth surfaces 3 and 4 of the body 110, and may be in contact with one end of the internal electrode (121 and 122) in the second direction.

The electrode layer (131 and 141) may include a first electrode layer 131 connected to the first internal electrode 121, and a second electrode layer 141 connected to the second internal electrode 122.

As illustrated in FIGS. 1 to 4, the electrode layer (131 and 141) may be disposed at the connection portion and the band portion of the external electrodes 130 and 140.

The electrode layer (131 and 141) may include a conductive metal and glass. As the conductive metal, a material having excellent electrical conductivity may be used, but the present disclosure is not specifically limited thereto. For example, the conductive metal may be one or more of Cu, Ni, Sn, Pd, Au, or alloys thereof.

A method of forming the electrode layer (131 and 141) is not particularly limited. For example, a method of dipping a conductive paste including the conductive metal and the glass onto the third surface 3 and fourth surface 4 of the body 110 may be used. When using the dipping method, the conductive paste may be formed not only to the third surface 3 and the fourth surface 4 of the body 110, but also to a portion of the first surface 1, a portion of the second surface 2, a portion of the fifth surface 5, and a portion of the sixth surface 6.

The external electrodes 130 and 140 may include the first plating layer (132 and 142) disposed on the electrode layer (131 and 141). The first plating layer (132 and 142) may serve to improve sealing or mechanical strength by protecting the electrode layer (131 and 141) from external environmental factors such as heat or moisture.

In an embodiment, the first plating layer (132 and 142) may be disposed to cover the electrode layer (131 and 141), and thus effects of improving sealing or mechanical strength may become more significant.

Components of the first plating layer (132 and 142) are not particularly limited. The first plating layer (132 and 142) may include a metal that may smoothly form a plating layer. For example, the first plating layer (132 and 142) may include one or more of Cu, Ni, Sn, Pd, Au, or alloys thereof.

More specifically, the fist plating layer (132 and 142) are Cu plating layer including Cu. Therefore, a phenomenon of plating breakage of an Ni plating layer, which will be described later, may be suppressed.

In an embodiment, the first plating layer (132 and 142) may include the same metal as the conductive metal included in the electrode layer (131 and 141). Therefore, electrical connectivity and bonding strength of the first plating layer (132 and 142) and the electrode layer (131 and 141) may be further improved.

Unlike a surface of the body 110, since the first plating layer (132 and 142) may have small amounts of ceramic components and large amounts of metal components, the first plating layer (132 and 142) and the surface of the body 110 may have weak binding force. Therefore, the first plating layer (132 and 142) and the surface of the body 110 may be separated from each other, and an interface therebetween may then be a penetration path for external moisture, which may cause damage to the electrode layer (131 and 141). Especially, ends of the electrode layer (131 and 141) in the band portion may be formed to be thinner than other regions, and may thus be more vulnerable to external moisture penetration.

Therefore, in an embodiment of the present disclosure, moisture resistance reliability against external moisture penetration of the multilayer electronic component 100 may be improved by disposing the metal layer (151 and 152) including a conductive metal and glass between the electrode layer (131 and 141) and the body. Specifically, the metal layer (151 and 152) may include a conductive metal and glass, and may have thus excellent bonding strength with the electrode layer (131 and 141) and the body 110. In addition, the metal layer (151 and 152) may be interposed between the electrode layer (131 and 141) and the body in the band portion of the external electrodes 130 and 140, and may thus serve to form smoothly the first plating layer (132 and 142) up to ends of the band portions.

Referring to FIGS. 2, 3, and 4, the metal layer (151 and 152) according to an embodiment may be interposed between an end portion of the electrode layer (131 and 141) and the surface of the body 110 in the band portion. Specifically, one end of the metal layer (151 and 152) in the second direction may be disposed to exceed one end of the electrode layer (131 and 141) in the second direction, and the other end of the metal layer (151 and 152) in the second direction may be disposed in a portion between the electrode layer (131 and 141) and the surface of the body 110.

The conductive metal included in the metal layer (151 and 152) may be one or more of Sn, Pd, Au, Ni, Cu, or alloys thereof, and is not particularly limited as long as it may be a material having excellent electrical conductivity.

In an embodiment, the metal layer (151 and 152) may be continuously disposed on the first surface 1 and the second surface 2 from one end to the other end of the body 110 in the third direction, as illustrated in FIG. 6. Therefore, penetration of external moisture may be effectively prevented throughout the band portion formed on the first and second surfaces 1 and 2 of the body, and thus moisture resistance reliability of the multilayer electronic component 100 may be further improved.

In an embodiment, the metal layer (151 and 152) may be disposed on the first, second, fifth, and sixth surfaces 1, 2, 5, and 6. When the band portions of the external electrodes 130 and 140 are also formed on portions of the first, second, fifth, and sixth surfaces 1, 2, 5, and 6, the metal layer (151 and 152) may also be disposed on the first, second, fifth, and sixth surfaces 1, 2, 5, and 6 to prevent penetration of external moisture throughout the band portions. In this case, to further improve moisture resistance reliability of the multilayer electronic component 100, the metal layer (151 and 152) may be arranged to surround the first, second, fifth, and sixth surfaces 1, 2, 5, and 6, and the metal layer (151 and 152) arranged to surround the first, second, fifth, and sixth surfaces 1, 2, 5, and 6 may have a continuous shape along the first, second, fifth, and sixth surfaces 1, 2, 5, and 6, as illustrated in FIG. 7.

In an embodiment, the metal layer (151 and 152) may be disposed only on the first surface 1 and the second surface 2. When the band portions of the external electrodes 130 and 140 are formed on a portion of the first surface 1 and a portion of the second surface 2, or the band portions of the external electrodes 130 and 140 are formed on portions of the first, second, fifth, and sixth surfaces 1, 2, 5, and 6, the metal layer (151 and 152) may be disposed on only one of the first surface 1 or the second surface 2. In this case, it may be more difficult to improve moisture resistance reliability than when the metal layer (151 and 152) is disposed on the first, second, fifth, and sixth surfaces 1, 2, 5, and 6, but there may be no need to perform an additional process of separately forming the metal layer (151 and 152) on the fifth and sixth surfaces 5 and 6, and sizes of the external electrodes 130 and 140 in the third direction may be reduced. Therefore, it may be advantageous for thinning the external electrodes 130 and 140.

Referring to FIG. 2, the metal layer (151 and 152) may be disposed on only one of the first surface 1 and the second surface 2. When the first surface 1 is a mounting surface, the multilayer electronic component 100 may be more vulnerable to penetration of external moisture as it moves toward the second surface 2, which may be a surface facing the first surface 1. Therefore, in an embodiment, the external electrodes 130 and 140 may be thinned while securing moisture resistance reliability by disposing the metal layer (151 and 152) only on one of the first surface 1 or the second surface 2.

In an embodiment, a portion of the metal layer (151 and 152) may be disposed beyond one end of the electrode layer (131 and 141) in the second direction in the band portion. In this case, since a portion of the metal layer (151 and 152) including a conductive metal and glass is present at a portion of an interface between the first plating layer (132 and 142) and the body 110, bonding strength of the first plating layer (132 and 142) and the surface of the body 110 may be improved.

In this case, the first plating layer (132 and 142) may cover a portion of the metal layer (151 and 152) disposed beyond one end of the electrode layer (131 and 141) in the second direction. Therefore, bonding strength between the electrode layer (131 and 141) and the body 110 may be further improved, and bonding strength between the first plating layer (132 and 142) and the body 110 may also be improved. As a result, a phenomenon of generating a gap between the first plating layer (132 and 142) and the body 110 may be suppressed, and penetration of external moisture may be suppressed, to further improve moisture resistance reliability of the multilayer electronic component 100.

A portion of the metal layer (151 and 152) may be disposed in the band portions to not exceed ends of the first plating layer (132 and 142) in the first direction. In this case, one end of the metal layer (151 and 152) in the second direction may be interposed between one end of the electrode layer (131 and 141) in the band portions in the second direction and one end of the first plating layer (132 and 142) in the second direction.

In this case, if a total length of the metal layer (151 and 152) is 'a', and a length of a portion of the metal layer (151 and 152) disposed beyond one end of the electrode layer (131 and 141) in the second direction is 'b', b/a of 0.5 or more and 1.0 or less may be satisfied.

When b/a is less than 0.5, it may be difficult to form sufficient bonding strength with the first plating layer (132 and 142), and an effect of improving moisture resistance reliability may be small.

The upper limit of b/a is not specifically restricted, but may not exceed 1.0.

Therefore, in an embodiment, by ensuring that b/a satisfies 0.5 or more and 1.0 or less, moisture resistance reliability of the multilayer electronic component may be improved and an excessive increase in volume of the external electrodes may be suppressed.

A method of forming the metal layer (151 and 152) is not particularly limited. For example, before forming the external electrode, the metal layer (151 and 152) may be formed on the first surface 1 or the second surface 2 by printing a conductive paste including a conductive metal and glass on surfaces of the cover portions 112 and 113. Before forming the external electrode, the metal layer (151 and 152) may be formed on the fifth surface 5 or the sixth surface 6 by attaching a sheet including a conductive metal and glass on the fifth surface 5 and the sixth surface 6 of the body 110.

A method of distinguishing the metal layer (151 and 152) in the multilayer electronic component 100 is not particularly limited. When the metal layer (151 and 152) includes the same metal as a metal component of the electrode layer (131 and 141) or a metal component of the first plating layer (132 and 142), even when cross-sections in the first and second directions are observed with a scanning electron microscope (SEM), it may be difficult to distinguish the metal layer (151 and 152). In this case, the band portions of the external electrode may be distinguished by high-resolution observation using a field emission-scanning electron microscope (FE-SEM), a transmission electron microscope (TEM), or the like. Specifically, the metal layer (151 and 152) may be distinguished as a region including a material in addition to the metal components.

When the metal layer (151 and 152) includes a different metal from the electrode layer (131 and 141) or the first plating layer (132 and 142), the metal layer (151 and 152) may be distinguished by a method such as a scanning electron microscope-energy dispersive spectroscopy (SEM-EDS), a transmission electron microscope-energy dispersive spectroscopy (TEM-EDS), or the like. For example, the metal layer (151 and 152) may be distinguished by observing the end portions of external electrodes in cross-sections of the multilayer electronic component 100 in the first and second directions, and according to the presence or absence of other metal elements.

An Ni plating layer (133 and 143) may be disposed on the first plating layer (132 and 142), and an Sn plating layer (134 and 144) may be disposed on the Ni plating layer (133 and 143).

The present disclosure is not limited to the Ni plating layer (133 and 143) and the Sn plating layer (134 and 144), and a single plating layer or a plurality of plating layers, including one or more of Cu, Ni, Sn, Pd, Au or their alloys, may be disposed on the first plating layer (132 and 142).

A size of the multilayer electronic component 100 is not limited.

To simultaneously achieve miniaturization and high capacitance, thicknesses of the dielectric layer and internal electrodes should be thinned to increase the number of stacked layers. In the multilayer electronic component 100 having a size of 0201 (length x width, 0.2 mm x 0.1 mm) or less, it may be difficult to ensure humidity resistance reliability.

Therefore, considering manufacturing errors, external electrode sizes, etc., when a length of the multilayer electronic component 100 is 0.22 mm or less and a width thereof is 0.11 mm or less, an effect of improving reliability according to the present disclosure may be more significant. In this case, the length of the multilayer electronic component 100 may refer to a maximum size of the multilayer electronic component 100 in the second direction, and the width of the multilayer electronic component 100 may refer to a maximum size of the multilayer electronic component 100 in the third direction.

In addition, the expression `an embodiment' used in this specification does not mean the same embodiment, and may be provided to emphasize and describe different unique characteristics. However, an embodiment presented above may not be excluded from being implemented in combination with features of another embodiment. For example, although the description in a specific embodiment is not described in another example, it can be understood as an explanation related to another example, unless otherwise described or contradicted by the other embodiment.

The terms used in this disclosure are used only to illustrate various examples and are not intended to limit the present inventive concept. Singular expressions include plural expressions unless the context clearly dictates otherwise.

One of many effects of the present disclosure is to prevent a phenomenon in which an end portion of a plating layer and a surface of a body are separated from each other by disposing a metal layer including a conductive metal and glass between an electrode layer and the body, thereby improving moisture resistance reliability of a multilayer electronic component.

However, various advantages and effects of the present disclosure are not limited to the above-described contents, and can be more easily understood in a process of explaining specific embodiments of the present disclosure.

While example embodiments have been illustrated and described above, it will be apparent to those skilled in the art that modifications and variations could be made without departing from the scope of the present disclosure as defined by the appended claims.

## Claims

1. A multilayer electronic component comprising:
a body including a dielectric layer and internal electrodes alternately disposed with the dielectric layer in a first direction, and including a first surface and a second surface opposing each other in the first direction, a third surface and a fourth surface, connected to the first and second surfaces and opposing each other in a second direction, and a fifth surface and a sixth surface, connected to the first to fourth surfaces and opposing each other in a third direction; and
external electrodes including connection portions disposed on the third and fourth surfaces, and band portions extending from the respective connection portions onto at least one of a portion of the first surface or a portion of the second surface,
wherein the external electrodes each include an electrode layer connected to one of the internal electrodes, and a first plating layer disposed on the electrode layer, and
a metal layer including a conductive metal and glass is interposed between the electrode layer and the body in the band portions.

2. The multilayer electronic component of claim 1, wherein the band portions are arranged to extend from the connection portions onto portions of the first, second, fifth, and sixth surfaces.

3. The multilayer electronic component of claim 2, wherein the metal layer is disposed only on the first surface and the second surface.

4. The multilayer electronic component of claim 1, wherein the metal layer is disposed on only one of the first surface and the second surface.

5. The multilayer electronic component of claim 2, wherein the metal layer is also disposed on the first, second, fifth, and sixth surfaces.

6. The multilayer electronic component of claim 5, wherein the metal layer is disposed to surround the first, second, fifth, and sixth surfaces.

7. The multilayer electronic component of claim 1, wherein the metal layer is continuously disposed on at least one of the first surface or the second surface from one end to the other end of the body in the third direction.

8. The multilayer electronic component of claim 1, wherein a portion of the metal layer is disposed beyond one end of the electrode layer in the second direction in the band portion.

9. The multilayer electronic component of claim 8, wherein the first plating layer covers the portion of the metal layer disposed beyond the one end of the electrode layer in the second direction.

10. The multilayer electronic component of claim 8, wherein, if a total length of the metal layer is 'a', and a length of the portion of the metal layer disposed beyond the one end of the electrode layer in the second direction is 'b', b/a is 0.5 or more and 1.0 or less.

11. The multilayer electronic component of claim 1, wherein the metal layer is disposed in the band portion to not exceed one end of the first plating layer in the second direction.

12. The multilayer electronic component of claim 1, wherein the first plating layer comprises Cu.

13. The multilayer electronic component of claim 1, wherein the electrode layer comprises a conductive metal and glass,
wherein the first plating layer includes the same metal as the conductive metal included in the electrode layer, and
the external electrode further includes a Ni plating layer disposed on the first plating layer and a Sn plating layer disposed on the Ni plating layer.

14. The multilayer electronic component of claim 1, wherein the conductive metal included in the metal layer comprises one or more of Sn, Pd, Au, Ni, or Cu.
